# DEMANDE DE BREVET EUROPEEN

(11) **EP 1 775 405 A1**
(43) Date de publication de la demande: **18.04.2007**
(21) Numéro de dépôt: 06291578.0
(22) Date de dépôt: 10.10.2006
(51) Int. Cl.: E05D 3/06, B60J 5/10, B62D 33/027, B62D 33/03

(54) **Mécanisme pour l'articulation d'un ouvrant sur une structure de véhicule automobile et véhicule comprenant un tel mécanisme**

(30) Priorité: 14.10.2005 FR 0510518; 14.10.2005 FR 0510519
(71) Demandeur: PEUGEOT CITROËN AUTOMOBILES S.A., 78140 Velizy Villacoublay (FR)
(72) Inventeur: Brocal, Sylvain, 90400 Dorans (FR)
(74) Mandataire: Habasque, Etienne J. Jean-François

(57) **Abrégé**

Ce mécanisme est du type comportant au moins un ensemble articulé (16) comprenant :
- une première bielle (18) reliée à la structure (6) par une première liaison (24) possédant un degré de liberté en rotation, et à l'ouvrant (4) par une deuxième liaison (28) possédant un degré de liberté en rotation ; et
- une deuxième bielle (20) reliée à l'ouvrant (4) par une troisième liaison (38) possédant un degré de liberté en rotation, et à la structure (6) par une quatrième liaison (42) possédant un degré de liberté en rotation, les axes de rotation (A1, A2, A3, A4) des première (24), deuxième (28), troisième (38) et quatrième (42) liaisons étant distincts et parallèles entre eux.

Selon un aspect de l'invention, la deuxième liaison (28) et la quatrième liaison (42) possédant chacune un degré de liberté en translation le long respectivement d'une première ligne (L1) et d'une deuxième ligne (L2).

## Description

La présente invention concerne un mécanisme pour l'articulation d'un ouvrant sur une structure de véhicule automobile, du type comportant au moins un ensemble articulé comprenant :
- une première bielle reliée à la structure par une première liaison possédant un degré de liberté en rotation autour d'un premier axe, et à l'ouvrant par une deuxième liaison possédant un degré de liberté en rotation autour d'un deuxième axe; et
- une deuxième bielle reliée à l'ouvrant par une troisième liaison possédant un degré de liberté en rotation autour d'un troisième axe, et à la structure par une quatrième liaison possédant un degré de liberté en rotation autour d'un quatrième axe, les premier, deuxième, troisième et quatrième axes étant distincts et parallèles entre eux.

Il est possible de monter un ouvrant, par exemple une porte arrière de coffre de véhicule automobile rotatif sur la structure d'un véhicule automobile par l'intermédiaire d'une charnière à un axe de rotation par rapport à la structure.

Il est également possible d'articuler un ouvrant d'un véhicule automobile à l'aide d'un mécanisme d'articulation du type précité, dans lequel les liaisons sont des liaisons pivots.

Néanmoins, de tels mécanismes d'articulation ne permettent pas d'ajuster la trajectoire de l'ouvrant de façon satisfaisante, et il en résulte des contraintes structurelles et esthétiques lors de la conception du véhicule automobile.

Un but de l'invention est de fournir un mécanisme pour l'articulation d'un ouvrant sur la structure d'un véhicule automobile permettant une meilleure adaptation de la trajectoire de l'ouvrant lors de son déplacement.

A cet effet, l'invention propose un mécanisme pour l'articulation d'un ouvrant sur une structure de véhicule automobile du type précité, caractérisé en ce que la deuxième liaison et la quatrième liaison possèdent chacune un degré de liberté en translation le long respectivement d'une première ligne et d'une deuxième ligne.

Selon d'autres modes de réalisation, le mécanisme comprend une ou plusieurs des caractéristiques suivantes, prise(s) isolément ou selon toutes les combinaisons techniquement possibles :
- les première et deuxième bielles sont reliées entre elles par une cinquième liaison possédant un degré de liberté en rotation autour d'un axe parallèle aux premier, deuxième, troisième et quatrième axes;
- chacune des première et deuxième bielles est reliée à chacun de l'ouvrant et de la structure à l'une de ses extrémités, et est reliée par la cinquième liaison à l'autre parmi la première et la deuxième bielles entre ses extrémités;
- la première et la deuxième lignes de translation s'étendent chacune dans un plan perpendiculaire respectivement au deuxième et au quatrième axe;
- au moins une des deuxième et quatrième liaisons comprend un guide définissant la ligne de translation de ladite liaison, et un coulisseau apte à se déplacer dans le guide ;
- le coulisseau est adapté pour pivoter dans le guide autour du deuxième ou du quatrième axe de la liaison correspondante parmi les deuxième et quatrième liaisons ; et
- les première et troisième liaisons sont des liaisons pivot.

Par ailleurs, l'invention concerne un mécanisme pour l'articulation d'un ouvrant sur une structure de véhicule automobile, du type comprenant un cache prévu pour recouvrir la jointure entre la structure et l'ouvrant, le cache étant monté mobile sur la structure par l'intermédiaire de moyens de liaison.

Il est possible de prévoir une porte arrière de coffre montée rotative par un bord inférieur sur la structure du véhicule automobile autour d'un axe d'articulation horizontal entre une position verticale relevée de fermeture, et une position horizontale abaissée d'ouverture, et un cache monté rotatif sur la structure autour d'un autre axe d'articulation, parallèle à l'axe de rotation de la porte et décalé vers l'intérieur du véhicule par rapport à l'axe de rotation de la porte, le cache étant sollicité en appui contre la porte par un ressort.

En position relevée de la porte, le cache s'étend verticalement le long de la porte. Lors de l'ouverture de la porte, du fait du décalage entre les axes de rotation de la porte et du cache, le cache se décale par rapport à la porte en glissant le long de la celle-ci, et en position abaissée de la porte, le cache s'étend à cheval au-dessus de la jonction entre la porte et un plancher du coffre, de façon à assurer une continuité de surface entre la porte et le plancher pour faciliter le chargement d'objets dans le coffre.

Néanmoins, lors de l'ouverture et de la fermeture, le cache frotte contre la porte, et il en résulte une usure rapide des revêtements du cache et de la porte.

A cet égard, un but de l'invention est de proposer un mécanisme d'articulation d'un ouvrant sur une structure de véhicule automobile permettant de limiter une usure d'un cache.

A cet effet, l'invention propose un mécanisme d'articulation d'un ouvrant sur une structure de véhicule automobile, du type précité, caractérisé en ce que les moyens de liaison comprennent au moins une bielle articulée sur la structure et sur le cache autour de deux axes parallèles et distincts.

Selon d'autres modes de réalisation, le mécanisme comprend une ou plusieurs des caractéristiques suivantes, prise(s) isolément ou selon toutes les combinaisons techniquement possibles :
- les moyens de liaison comprennent deux bielles reliant le cache et la structure avec des entraxes différents;
- le cache est lié en déplacement à l'ouvrant;
- au moins une des bielles reliant le cache et la structure, relie l'ouvrant et la structure, de sorte que l'ouvrant et le cache sont liés en déplacement;
- la bielle est reliée à l'ouvrant par une liaison à un degré de liberté en rotation autour d'un axe d'articulation, et un degré de liberté en translation le long d'une ligne s'étendant dans un plan perpendiculaire à l'axe d'articulation de la bielle sur l'ouvrant;
- la bielle constitue une première bielle d'un ensemble articulé comprenant une deuxième bielle articulée sur l'ouvrant, et reliée à la structure par une liaison à un degré de liberté en rotation autour d'un axe d'articulation et un degré de liberté en translation le long d'une ligne s'étendant dans un plan perpendiculaire à l'axe d'articulation de la deuxième bielle par rapport à la structure;
- les première et deuxième bielles sont articulées l'une sur l'autre.

L'invention concerne également un véhicule automobile comprenant un ouvrant articulé sur une structure du véhicule automobile par l'intermédiaire d'un mécanisme tel que défini ci-dessus.

Selon un mode de réalisation, l'ouvrant est une porte arrière destinée à fermer un coffre ou un plateau arrière du véhicule automobile.

L'invention et ses avantages seront mieux compris à la lecture de la description qui va suivre, donnée uniquement à titre d'exemple, et faite en se référant aux dessins annexés, sur lesquels :
- la figure 1 est une vue schématique latérale de la partie arrière d'un véhicule automobile comprenant une porte arrière articulée sur la structure du véhicule automobile à l'aide d'un mécanisme conforme à l'invention ;
- la figure 2 est une vue en perspective de trois quart arrière de la partie arrière du véhicule automobile de la figure 1, la porte étant en position ouverte ;
- les figures 3 à 5 sont des vues schématiques latérales de la porte et d'un ensemble articulé du mécanisme dans différentes positions ; et
- les figures 6 à 10 sont des vues analogues à celles des figures 1 à 5, illustrant un mécanisme selon une variante de l'invention monté à l'arrière d'un véhicule automobile.

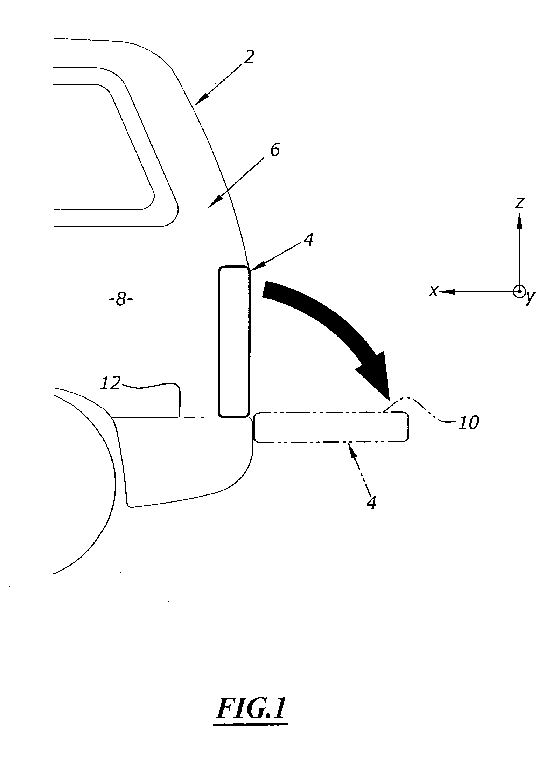

Tel que représenté sur la figure 1, le véhicule 2 comprend la porte 4 articulée sur une structure 6 du véhicule 2 entre une position relevée verticale (en trait plein) de fermeture d'un coffre 8 du véhicule 2 et une position abaissée horizontale (en trait mixte) d'ouverture du coffre 8.

Dans la suite de la description, les orientations utilisées sont les orientations usuelles des véhicules automobiles. Il sera ainsi fait référence au système d'axes orthogonaux usuellement utilisé pour les véhicules automobiles et représenté sur la figure 1, comprenant :
- un axe longitudinal X dirigé de l'arrière vers l'avant du véhicule 2;
- un axe transversal Y dirigé de la droite vers la gauche du véhicule 2 ; et
- un axe vertical Z dirigé du bas vers le haut.

En position relevée, la porte 4 s'étend sensiblement verticalement en travers d'une ouverture arrière du coffre 8.

En position abaissée, la porte 4 s'étend sensiblement horizontalement, et possède une surface supérieure 10 située sensiblement dans le plan d'un plancher 12 du coffre 8, pour faciliter le chargement d'objets dans le coffre 8.

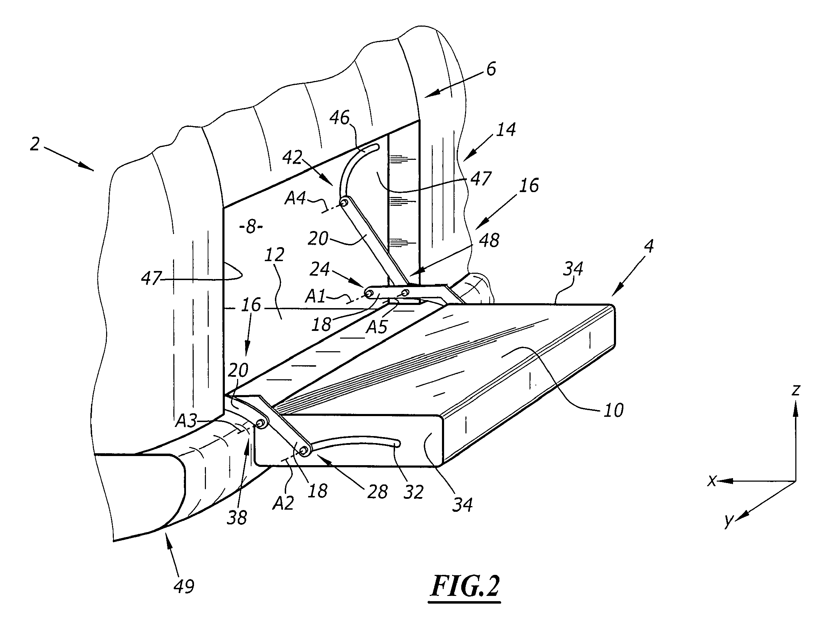

Tel que représentée sur la figure 2, la porte 4 est articulée sur la structure 6 par l'intermédiaire d'un mécanisme 14 comprenant deux ensembles articulés 16, possédant chacun une première bielle 18 et une deuxième bielle 20, chacune reliée à la porte 4 et à la structure 6.

Les ensembles 16 sont sensiblement symétriques l'un de l'autre par rapport à un plan longitudinal médian du véhicule 2 incluant les axes X et Z, et fonctionnent de façon identique.

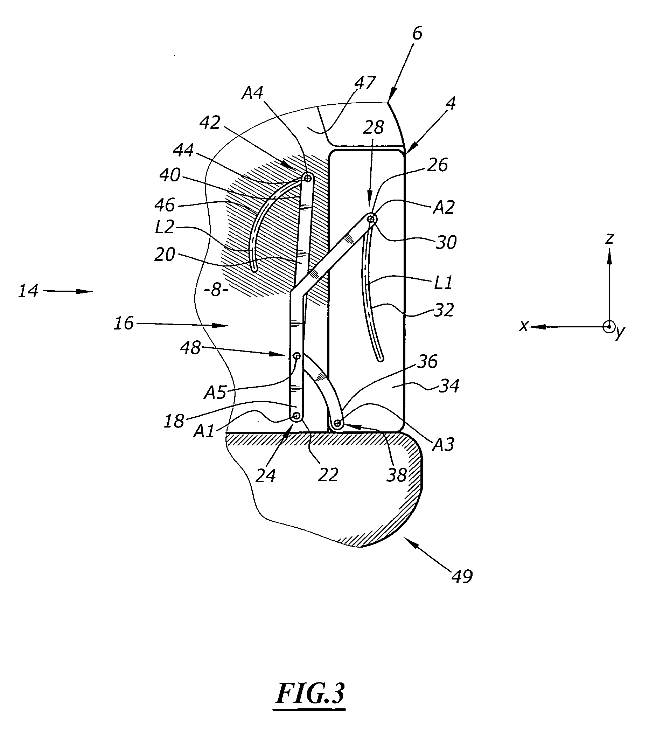

Tel que représentée sur la figure 3, la bielle 18 de chaque ensemble 16 possède une extrémité 22 reliée à la structure 6 par l'intermédiaire d'une première liaison 24 du type liaison pivot autorisant une rotation autour d'un premier axe A1.

La bielle 18 de chaque ensemble 16 possède une autre extrémité 26 reliée à la porte 4 par l'intermédiaire d'une deuxième liaison 28 autorisant une rotation autour d'un deuxième axe A2 et une translation le long d'une ligne L1.

La liaison 28 comprend un coulisseau 30 fixé sur l'extrémité 26, et se déplaçant dans un rail 32 solidaire d'une paroi latérale 34 de la tranche de porte 4. Le rail 32 s'étend suivant la ligne L1, qui est située dans un plan perpendiculaire à l'axe A2. Le coulisseau 30 est cylindrique d'axe A2, de façon à permettre la rotation du coulisseau 30, et donc de la bielle 18, autour de l'axe A2 par rapport à la porte 4.

La bielle 20 de chaque ensemble 16 possède une extrémité 36 reliée à la porte 4 par l'intermédiaire d'une troisième liaison 38 du type liaison pivot autorisant une rotation autour d'un troisième axe A3.

La bielle 20 de chaque ensemble 16 possède une autre extrémité 40 reliée à la structure 6 par une quatrième liaison 42 permettant une rotation autour d'un quatrième axe A4, et une translation le long d'une ligne L2.

La liaison 42 comprend un coulisseau 44 fixé sur l'extrémité 40, et se déplaçant dans un rail 46 solidaire d'une paroi latérale 47 du coffre 8. Le rail 46 s'étend suivant la ligne L2, qui est située dans un plan perpendiculaire à l'axe A4. Le coulisseau 44 est cylindrique d'axe A4, de façon à permettre la rotation du coulisseau 44, et donc de la bielle 20, autour de l'axe A4 par rapport à la structure 6.

Les bielles 18 et 20 de chaque ensemble 16 sont reliées entre elles, entre leurs extrémités 22 et 26 pour la bielle 18, et 36 et 40 pour la bielle 20, par une cinquième liaison 48 du type liaison pivot autorisant une rotation des bielles 18 et 20 l'une par rapport à l'autre autour d'un cinquième axe A5.

Les liaisons 24, 28, 38, 42 et 48 possèdent chacune un seul degré de liberté en rotation, autour des axes A1, A2, A3, A4, et A5 respectivement. Les liaison 28 et 42 possèdent chacun un seul degré de liberté en translation : le long des lignes L1 et L2 respectivement.

Les axes A1, A2, A3, A4 et A5 sont parallèles entre eux et à l'axe Y.

L'axe A1 est fixe par rapport à la structure 6. Les axes A2, A3, A4 et A5 se déplacent par rapport à la structure 6 lors du déplacement de la porte 4.

Tel que représenté, les lignes L1 et L2 sont courbes. En variante, une des lignes L1 et L2 est rectiligne, ou les deux lignes L1 et L2 sont rectilignes, sur toute leur longueur ou sur un tronçon seulement.

La trajectoire de la porte 4 par rapport à la structure 6 dépend de nombreux paramètres, parmi lesquels :
- les positions en X et en Z des axes A1 et A3 sur respectivement la structure 6 et la porte 4 ;
- les entraxes des bielles 18 et 20, c'est-à-dire les distances entre les axes A1 et A2 et entre les axes A3 et A4 ;
- la forme des lignes L1 et L2, et leurs positions en X et en Z sur respectivement la porte 4 et la structure 6 ; et
- la position en X et en Z de l'axe A5 par rapport aux axes A1, A2, A3 et A4.

La modification de l'un de ces paramètres modifie la trajectoire de la porte 4 par rapport à la structure 6. Par conséquent, étant donné le grand nombre de paramètres permettant d'ajuster la trajectoire de la porte 4, il est possible de définir des trajectoires complexes comprenant des phases de rotation et des phases de translation.

En particulier, les liaisons 28 et 42 confèrent des degrés de liberté en translation permettant d'augmenter les possibilités de trajectoire par rapport par exemple à une articulation à deux bielles et à liaisons du type liaison pivot.

Du fait des liaisons 28 et 42, chaque ensemble 16 permet d'obtenir une trajectoire de porte possédant un grand débattement tout en conservant des bielles 18 et 20 courtes, préservant la compacité du mécanisme 14.

La liaison 48 entre les bielles 18 et 20 ajoute une contrainte de positionnement relatif entre les bielles 18 et 20 compensant les degrés de liberté en translation conférés par les liaisons 28 et 42. Il en résulte que la trajectoire est déterminée, avec un guidage précis.

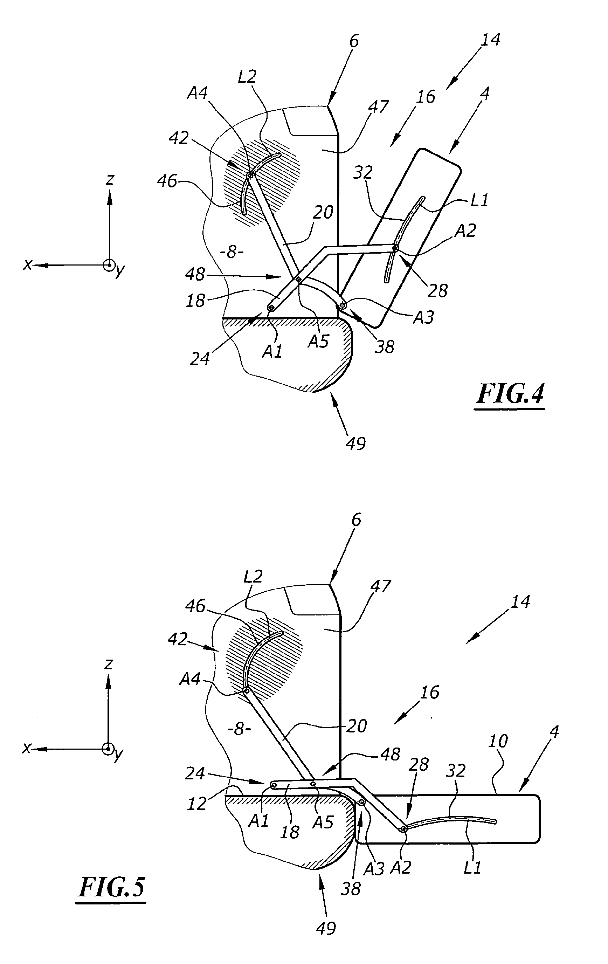

Comme illustré sur les figures 3 à 5, lors du déplacement entre la position de fermeture et la position d'ouverture, la porte 4 se déplace d'abord sensiblement en translation vers l'arrière avec un léger basculement vers l'arrière, puis bascule vers l'arrière en position horizontale (figure 4) puis se déplace sensiblement en translation verticale vers le bas (figure 5) de façon que sa surface 10 soit sensiblement dans le prolongement du plancher 12.

Lors du déplacement de la porte 4, les ensembles 16 se déplacent de façon synchronisée.

Afin de provoquer la rotation de la porte 4 lors de son déplacement, il est possible par exemple de prévoir des entraxes des bielles 18 et 20 différents. Des distances différentes entre l'axe A5 et les axes A1 à A4 des ensembles 16 permettent aussi de provoquer la rotation de la porte 4 lors de son déplacement, ainsi que la forme des lignes L1 et L2.

Lors de son déplacement, la porte 4 contourne le pare-chocs arrière 49 du véhicule 2. Ainsi, il n'est pas nécessaire de prévoir un dégagement dans le pare-chocs 49 pour permettre le déplacement de la porte 4. Un tel dégagement nuirait à l'aspect esthétique du véhicule 2. En outre, cela évite d'imposer des contraintes de forme à la partie de la structure 6 située sous le pare-chocs 49.

Les bielles 18 et 20 possèdent des formes coudées permettant d'éviter des collisions entre ces bielles 18 et 20 et la structure du véhicule automobile. En particulier, la forme coudée de la bielle 18 évite qu'elle n'interfère avec le pare-chocs 49.

De préférence, en chaque point de la trajectoire de la porte 4, le centre instantané de rotation de la porte 4 est situé à l'extérieur du véhicule automobile, ce qui permet d'éviter toute collision entre la porte 4 et un élément de structure du véhicule automobile, tel que le pare-chocs 49.

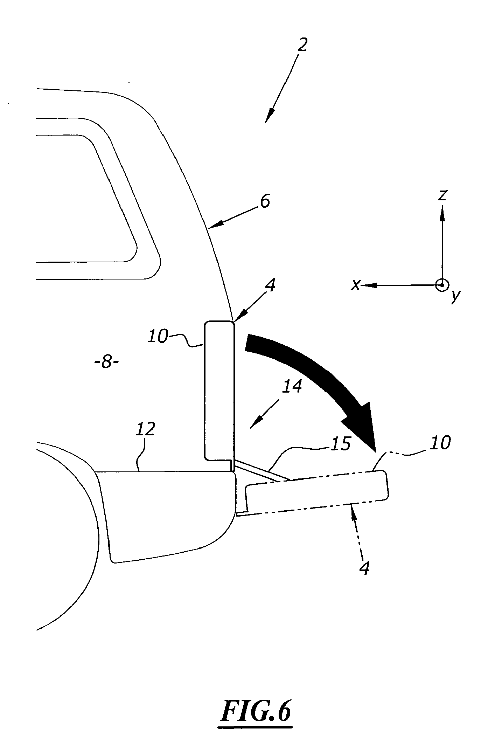

Dans la variante représentées sur les figures 6 à 10, où les références aux éléments semblables ont été conservées, le mécanisme 14 comprend en outre un cache 15 recouvrant la séparation entre le plancher 12 et la surface 10 lorsque la porte 4 est en position d'ouverture (traits mixtes), de façon à assurer une continuité de surface entre la surface 10 et le plancher 12.

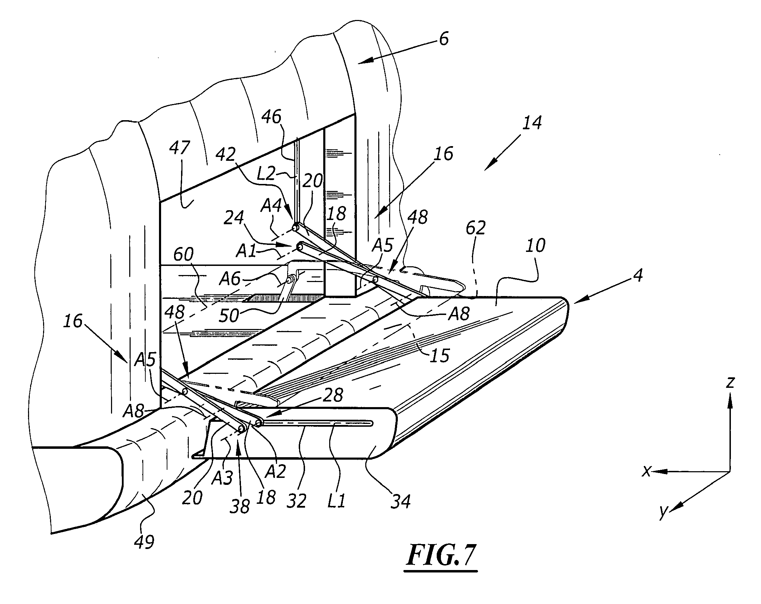

Tel que représenté sur la figure 7, le cache 15 se présente sous la forme d'une plaque sensiblement plane s'étendant parallèlement à l'axe Y, et comprenant des bords 60 et 62 opposés, parallèles à l'axe Y.

Chaque ensemble 16 comprend une troisième bielle 50 reliant le cache 15 et la structure 6.

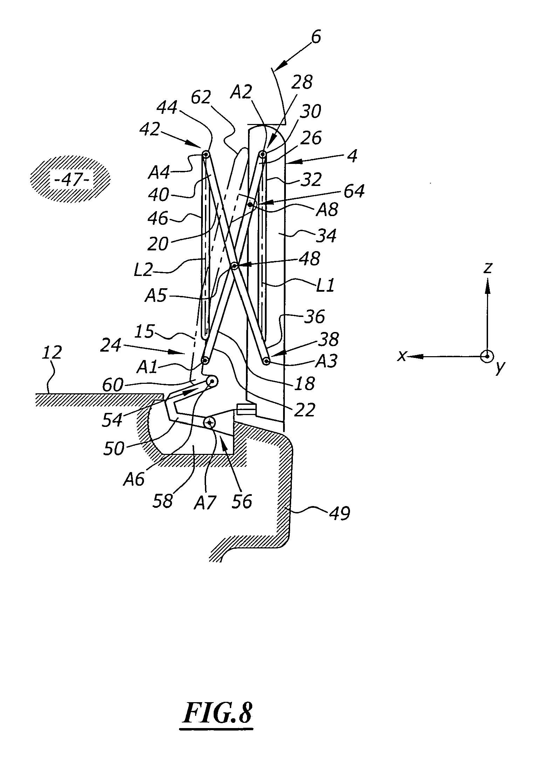

Telle que représentée sur la figure 8, la bielle 50 est articulée sur le cache 15 par l'intermédiaire d'une sixième liaison 54, du type liaison pivot, à un degré de liberté en rotation autour d'un axe A6.

La bielle 50 est articulée sur la structure 6 par l'intermédiaire d'une septième liaison 56, du type liaison pivot, à un degré de liberté en rotation autour d'un axe A7.

La bielle 50 est reçue dans un logement 58 ménagé dans le plancher 12, à l'extrémité arrière de celui-ci.

Le cache 15 est relié à la structure 6 par la bielle 18 de chaque ensemble 16. Plus précisément, le cache 15 est articulé sur la bielle 18 par l'intermédiaire d'une huitième liaison 64, du type liaison pivot, à un degré de liberté en rotation autour d'un axe A8. L'axe A8 se situe le long de la bielle 18 entre l'axe A5 et l'axe A2.

Les liaisons 24, 28, 38, 42, 48, 54, 56 et 64 possèdent chacune un seul degré de liberté en rotation, autour des axes A1, A2, A3, A4, A5, A6, A7 et A8 respectivement. Les liaisons 28 et 42 possèdent chacune un seul degré de liberté en translation : le long des lignes L1 et L2 respectivement.

Les axes A1, A2, A3, A4, A5, A6, A7 et A8 sont parallèles entre eux et à l'axe Y.

Les axes A1 et A7 sont fixes par rapport à la structure 6. Les axes A2, A3, A4, A5, A6 et A8 se déplacent par rapport à la structure 6 lors du déplacement de la porte 4.

Tel que représenté, les lignes L1 et L2 sont rectilignes. En variante, une des lignes L1 et L2 est courbe, ou les deux lignes L1 et L2 sont courbes, sur toute leur longueur ou sur un tronçon seulement.

Les bielles 18 et 20 sont rectilignes. En variante, les bielles 18 et 20 sont courbes au moins en partie, pour éviter des collisions entre ces bielles 18 et 20 et la structure 6, notamment le pare-chocs 49.

Chaque bielle 18 et 50 permet un déplacement du cache 15 par rapport à la structure 6 selon une trajectoire complexe permettant d'éviter que le cache 15 ne frotte contre la porte 4 lors du déplacement de la porte 4. Ceci évite une usure du cache 15 et de la surface 10 et la formation de bruits de frottement, et limite les efforts nécessaires à l'actionnement de la porte 4.

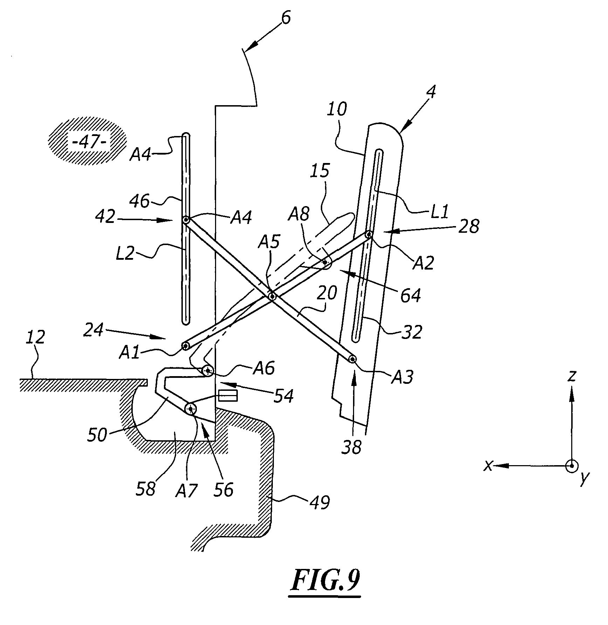

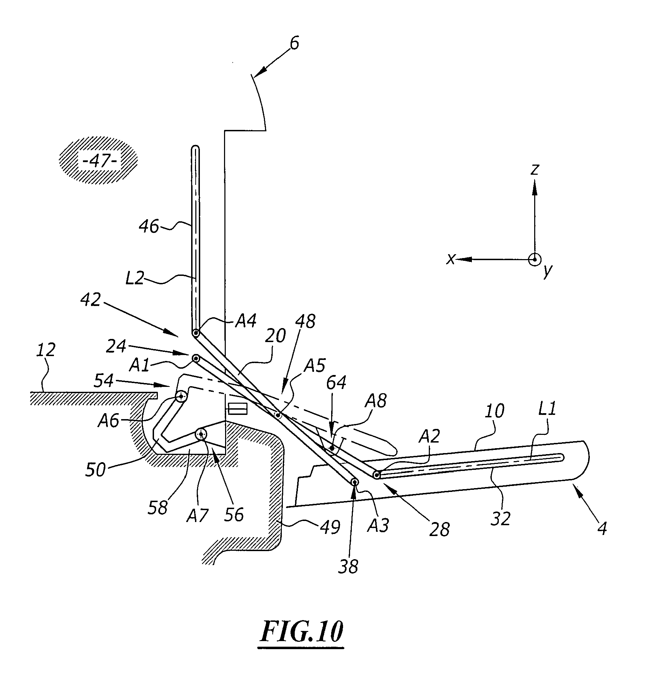

La trajectoire du cache 15 est fonction des distances respectives entre les axes A1, A6, A7 et A8. En effet, lors du mouvement d'ouverture de la porte 4 (figures 9 et 10), l'axe A8 suit la bielle 18 et se déplace en arc de cercle autour de l'axe A1, et l'axe A6 se déplace en arc de cercle autour de l'axe A7.

La bielle 50 et la bielle 18 relient chacune le cache 15 et la structure 6, mais avec des entraxes, c'est-à-dire des distances entre les axes A1 et A8, et A6 et A7, différents. Par conséquent, le cache 15 se déplace par rapport à la structure 6 en pivotement et en translation.

Ainsi, en position de fermeture (figure 8), le cache 15 s'étend sensiblement verticalement le long de la surface 10 de la porte 4, et en position d'ouverture (figure 10), le cache 15 recouvre en partie la surface 10, et s'étend jusqu'au plancher 12 de façon à assurer une continuité de surface entre la surface 10 et le plancher 12 pour faciliter le chargement d'objets dans le coffre 8.

L'articulation du cache 15 sur la structure 6 par l'intermédiaire de la bielle 18 reliant la structure 6 à l'ouvrant 4 assure que le cache 15 est lié en déplacement à la porte 4, et que l'ouverture de la porte 4 entraînera automatiquement le déploiement du cache 15.

Dans un mode de réalisation, le logement 58 s'étend suivant la direction Y, et les bielles 50 des ensembles 16 sont reliées par une pièce allongée suivant l'axe Y, constituant un seuil de coffre lorsque la porte 4 est en position d'ouverture.

Le mécanisme pour l'articulation du cache 15 lui-même, et certains des avantages liés, peuvent être obtenus éventuellement indépendamment d'un mécanisme à double bielles d'articulation d'un ouvrant, tel que le mécanisme 14.

Ainsi, l'invention concerne également de manière générale un mécanisme pour l'articulation d'un ouvrant sur une structure de véhicule automobile, du type comprenant un cache prévu pour recouvrir la jointure entre la structure et l'ouvrant, le cache étant monté mobile sur la structure par l'intermédiaire de moyens de liaison, dans lequel les moyens de liaison comprennent au moins une bielle articulée sur la structure et sur le cache autour de deux axes parallèles et distincts.

## Revendications

**1.** Mécanisme pour l'articulation d'un ouvrant (4) sur une structure (6) de véhicule automobile, du type comportant au moins un ensemble articulé (16) comprenant :
- une première bielle (18) reliée à la structure (6) par une première liaison (24) possédant un degré de liberté en rotation autour d'un premier axe (A1), et à l'ouvrant (4) par une deuxième liaison (28) possédant un degré de liberté en rotation autour d'un deuxième axe (A2) ; et
- une deuxième bielle (20) reliée à l'ouvrant (4) par une troisième liaison (38) possédant un degré de liberté en rotation autour d'un troisième axe (A3), et à la structure (6) par une quatrième liaison (42) possédant un degré de liberté en rotation autour d'un quatrième axe (A4), les premier (A1), deuxième (A2), troisième (A3) et quatrième (A4) axes étant distincts et parallèles entre eux ;
la deuxième liaison (28) et la quatrième liaison (42) possédant chacune un degré de liberté en translation le long respectivement d'une première ligne (L1) et d'une deuxième ligne (L2).
**caractérisé en ce que** les première et deuxième bielles (18, 20) sont reliées entre elles par une cinquième liaison (48) possédant un degré de liberté en rotation autour d'un axe (A5) parallèle aux premier (A1), deuxième (A2), troisième (A3) et quatrième (A4) axes.

**2.** Mécanisme selon la revendication 1, **caractérisé en ce que** chacune des première (18) et deuxième (20) bielles est reliée à chacun de l'ouvrant (4) et de la structure (6) à l'une de ses extrémités, et est reliée par la cinquième liaison (48) à l'autre parmi la première et la deuxième bielles (18, 20) entre ses extrémités.

**4.** Mécanisme selon la revendication 1 ou 2, **caractérisé en que** la première (L1) et la deuxième (L2) lignes de translation s'étendent chacune dans un plan perpendiculaire respectivement au deuxième (A2) et au quatrième (A4) axes.

**4.** Mécanisme selon l'une quelconque des revendications précédentes, **caractérisé en ce qu'**au moins une des deuxième (28) et quatrième (42) liaisons comprend un guide (32, 46) définissant la ligne (L1, L2) de translation de ladite liaison (28, 42), et un coulisseau (30, 44) apte à se déplacer dans le guide (32, 46).

**5.** Mécanisme selon la revendication 4, **caractérisé en ce que** le coulisseau (30, 44) est adapté pour pivoter dans le guide (32, 46) autour du deuxième (A2) ou du quatrième (A4) axes de la liaison correspondante parmi les deuxième (28) et quatrième (42) liaisons.

**6.** Mécanisme selon l'une quelconque des revendications précédentes, **caractérisé en ce que** les première (24) et troisième (38) liaisons sont des liaisons pivot.

**7.** Mécanisme selon l'une quelconque des revendications précédentes, **caractérisé en ce qu'**il comprend un cache (15) prévu pour recouvrir la jointure entre la structure (6) et l'ouvrant (4), le cache (15) étant monté mobile sur la structure (6) par l'intermédiaire de moyens de liaison (18, 24, 28 ; 50, 54, 56) comprennent au moins une bielle (18, 50) articulée sur la structure (6) et sur le cache (15) autour de deux axes (A1, A8 ; A6, A7) parallèles et distincts.

**8.** Mécanisme selon la revendication 7, **caractérisé en ce que** les moyens de liaison (18, 24, 28 ; 50, 54, 56) comprennent deux bielles (18, 50) reliant le cache (15) et la structure (6) avec des entraxes (A1, A8 ; A6, A7) différents.

**9.** Mécanisme selon la revendication 7 ou 8, **caractérisé en ce que** le cache (15) est lié en déplacement à l'ouvrant (4).

**10.** Mécanisme selon la revendication 9, **caractérisé en ce qu'**au moins une des bielles (18) reliant le cache (15) et la structure (6), est une des bielles reliant l'ouvrant (4) et la structure (6), de sorte que l'ouvrant (4) et le cache (15) sont liés en déplacement.

**11.** Mécanisme selon la revendication 10, **caractérisé en ce que** la bielle (18) reliant le cache (15), l'ouvrant (4) et la structure (6) est la première bielle (18).

**12.** Véhicule automobile comprenant un ouvrant (4) articulé sur une structure de véhicule par l'intermédiaire d'un mécanisme selon l'une quelconque des revendications précédentes.

**13.** Véhicule automobile selon la revendication 12, **caractérisé en ce que** l'ouvrant (4) est une porte arrière destinée à fermer un coffre (8) ou un plateau arrière du véhicule automobile.
